# FASCICULE DE BREVET EUROPEEN

(11) **EP 4 559 748 B1**
(45) Date de publication et mention de la délivrance du brevet: **17.06.2026**
(21) Numéro de dépôt: 24213999.6
(22) Date de dépôt: 19.11.2024
(51) Int. Cl.: B60P 3/20

(54) **CARROSSERIE DE VEHICULE FRIGORIFIQUE POUR LE TRANSPORT DE MARCHANDISE**
KÜHLFAHRZEUGKAROSSERIE FÜR DEN TRANSPORT VON GÜTERN
BODY OF A REFRIGERATED VEHICLE FOR TRANSPORTING GOODS

(30) Priorité: 20.11.2023 FR 2312763
(43) Date de publication de la demande: 28.05.2025
(73) Titulaire: Lamberet, 01380 Saint-Cyr-sur-Menthon (FR)
(72) Inventeur: GRANGER, Fabien, 01851 MARBOZ (FR); MOUCHET, Patrice, 01660 VANDEINS (FR); TUET, Gwénaël, 01000 BOURG EN BRESSE (FR); DUGAS, Frédéric, 01250 MONTAGNAT (FR)
(74) Mandataire: Germain Maureau

(56) Documents cités:
- EP-A2- 1 400 403
- FR-A1- 3 035 835

## Description

### Domaine technique

La présente invention concerne une carrosserie de véhicule frigorifique pour le transport de marchandises équipée d'une cloison de compartimentage pour véhicule frigorifique.

### Arrière-plan technique

Un véhicule frigorifique qui peut être un camion, une semi-remorque ou une remorque permet de transporter des denrées, par exemple, alimentaires ou pharmaceutiques qui nécessitent d'être maintenues à une température dirigée positive ou négative.

Pour cela, un véhicule frigorifique comprend une carrosserie qui comprend des panneaux isothermes et un groupe frigorifique qui envoie de l'air à une température régulée dans la carrosserie pour maintenir la température à l'intérieur de la carrosserie à une valeur qui permet la conservation des denrées qui y sont transportées.

L'espace intérieur qui est délimité par une carrosserie frigorifique peut aller jusqu'à 95 m3 et il peut être prévu de la doter d'une cloison mobile isolante qui permet de partitionner l'espace intérieur en fonction des produits à transporter.

La cloison de partitionnement est reliée au pavillon du véhicule par un mécanisme de liaison qui permet de la maintenir dans une position verticale dans laquelle la cloison sépare l'espace de chargement en deux zones ou de la maintenir dans une position escamotée dans laquelle la cloison est disposée contre le pavillon et n'empiète pas sur l'espace de chargement. Le mécanisme de liaison permet également de régler la position longitudinale de la cloison dans le véhicule au fonction des denrées à transporter.

Le document EP3825180 décrit un dispositif de partitionnement qui donne satisfaction mais qui pourrait être amélioré.

On connait également des dispositifs de partitionnement de véhicules frigorifiques par les documents EP1400403 et FR3035835.

Dans ce contexte technique, la présente invention a pour objet de proposer une carrosserie isotherme qui soit d'une manipulation plus ergonomique pour un utilisateur.

### Exposé de l'invention

L'invention propose une carrosserie de véhicule frigorifique pour le transport de marchandises comprenant :
- un plancher, un pavillon, deux parois latérales, une paroi avant, un ouvrant arrière qui délimitent un espace de chargement ;
- un groupe frigorifique ;
- au moins un panneau de partitionnement de l'espace de chargement relié au pavillon par un mécanisme de liaison ;
caractérisé en ce que le mécanisme de liaison comprend :
- un rail fixé sur le pavillon comprenant des perçages ;
- un ensemble mobile configuré pour supporter par une liaison pivot le panneau et pour coulisser sur le rail, l'ensemble mobile comprenant un boitier d'indexation ayant un doigt de verrouillage mécaniquement lié à une came, le doigt de verrouillage étant sollicité par des moyens élastiques dans une position déployée dans laquelle le doigt de verrouillage s'engage dans un perçage ;
- un galet supporté par le panneau configuré pour venir en appui contre la came lorsque le panneau pivote par rapport au pavillon d'un angle compris entre 30° et 60° et rétracter le doigt de verrouillage pour permettre le glissement de l'ensemble mobile par rapport au rail dans une direction longitudinale X.
- le boitier d'indexation comprenand des moyens de guidage de la came dans la direction longitudinale X et des moyens de guidage du doigt de verrouillage dans une direction verticale Z perpendiculaire à la direction longitudinale X, la came présentant une lumière orientée obliquement par rapport à la première direction longitudinale, dans laquelle est engagée une goupille solidaire du doigt de verrouillage.

Dans certains modes de réalisation, le boitier d'indexation comprend un ressort carré et une bielle dont une extrémité est liée au ressort carré et dont la seconde extrémité pousse la gouille dans la position déployée du doigt de verrouillage.

Dans certains modes de réalisation la lumière est orientée dans une plage angulaire de 30° à 60° par rapport à la direction longitudinale X.

Dans certains modes de réalisation la came présente une rampe comprenant deux segments inclinés, le segment d'extrémité ayant une pente plus importante que celle du segment proximal par rapport à la direction longitudinale X.

Dans certains modes de réalisation, le mécanisme de liaison comprend une chape sur laquelle est fixée le panneau, la chape supportant le galet.

Dans certains modes de réalisation, le mécanisme de liaison comprend au moins un vérin à gaz qui relie l'ensemble mobile au panneau.

Dans certains modes de réalisation, le panneau est pourvu d'un joint périphérique.

Dans certains modes de réalisation, l'ensemble mobile comprend au moins un axe sur lequel est monté la chape.

Dans certains modes de réalisation, le mécanisme de liaison (10) comprend des moyens de blocage de panneau lorsque le panneau est en applique contre le pavillon.

Dans certains modes de réalisation, la carrosserie comprend deux rails sur lesquels sont disposés deux ensembles mobiles qui supportent chacun un panneau.

Dans certains modes de réalisation, les deux ensembles mobiles (10) sont reliée par au moins une traverse.

Dans certains modes de réalisation, un cordon de liaison relie les doigts de verrouillage de chacun des ensemble mobile.

### Brève description des dessins

L'invention est décrite en référence aux figures ci-annexées dans lesquelles :
Fig.1 est une vue de côté d'un véhicule frigorifique ;
Fig.2 est une vue en perspective d'un mécanisme de liaison d'une cloison de partitionnement à un pavillon d'une carrosserie d'un véhicule frigorifique ;
Fig.3 est une vue en perspective à échelle agrandie de la figure 2 ;
Fig.4 est une vue de la figure 3 selon un autre angle de perspective,
Fig.5 est une vue en perspective d'un boitier d'indexation 25 dans sa position de repos,
Fig.6 est une vue en perspective du boitier d'indexation 25 dans sa position escamotée ;
Fig.7 est une vue éclatée en perspective du boitier d'indexation 25,
Fig.8 est une vue du boitier d'indexation 25 dans sa position avec omission du couvercle ;
Fig.9 est une vue du boitier d'indexation 25 dans sa position escamotée avec omission du couvercle ;
Fig.10 est une vue en coupe transversale du mécanisme de liaison dans sa position de verrouillage ;
Fig.11 est une vue en coupe transversale du mécanisme de liaison dans sa position de déverrouillage ;
Fig.12 est une vue en perspective de la cloison de partitionnement en position verticale ;
Fig.13 est une vue en perspective du mécanisme de liaison dans la position de la figure 12 ;
Fig.14 est une vue en perspective de la cloison de partitionnement en position de déplacement ;
Fig.15 est une vue en perspective du mécanisme de liaison dans la position de la figure 14 ;
Fig.16 est une vue en perspective de la cloison de partitionnement en position escamotée ;
Fig.17 est une vue en perspective du mécanisme de liaison dans la position de la figure 16 ;
Fig.18 est une vue en perspective montrant une variante de réalisation dans laquelle deux boitiers d'indexation sont reliés l'un à l'autre ;
Fig.19 est une vue à une échelle agrandie d'un boitier d'indexation de la figure 19 dans une position de verrouillage ;

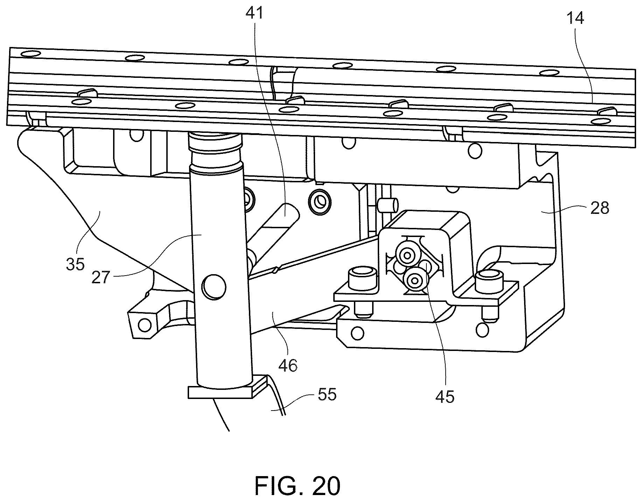

Fig.20 est une vue à une échelle agrandie d'un boitier d'indexation de la figure 19 dans une position de déverrouillage.

### Description détaillée

La présente description est faite dans un référentiel X,Y,Z lié au véhicule dans lequel l'axe X est lié à la direction longitudinale du véhicule, l'axe Y est lié à la direction transversale du véhicule et l'axe Z est lié est lié à la direction verticale du véhicule.

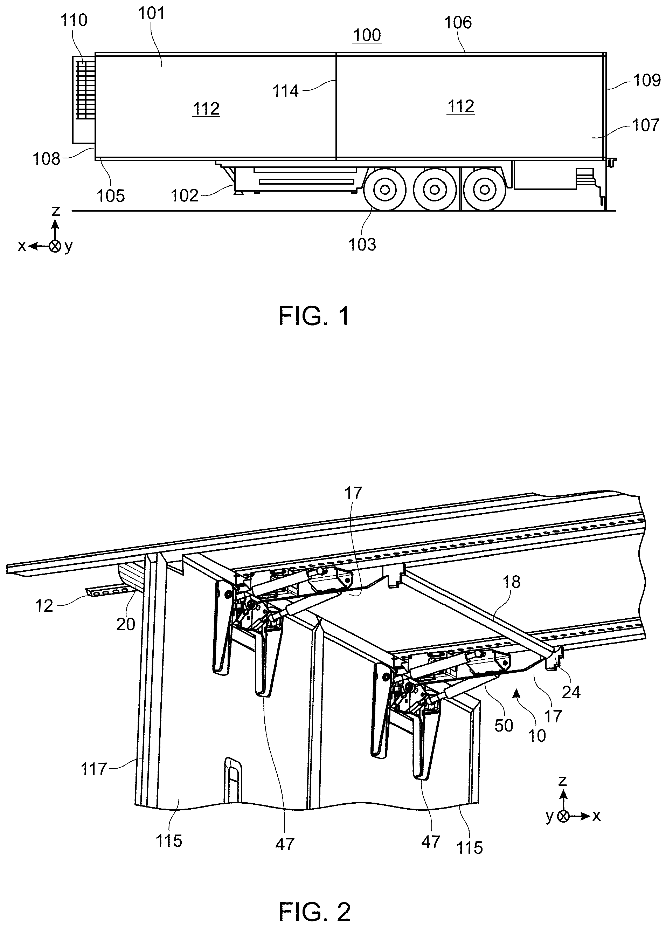

La figure 1 montre un véhicule frigorifique 100, en l'espèce une semi-remorque qui comprend une carrosserie 101 parallélépipédique fixée sur un châssis 102 équipé de roues 103.

La carrosserie 101 comprend un plancher 105, un pavillon 106, deux parois latérales 107, une paroi avant 108, un ouvrant arrière 109 qui sont formés de panneaux 115 isothermes et qui délimitent un espace de chargement 112. L'ouvrant arrière qui donne accès à l'espace de chargement 112 peut comprendre deux portes battantes ou une rideau enroulable selon le type de véhicule. L'espace de changement est ainsi thermiquement isolé du milieu ambiant.

Le véhicule comprend un groupe froid 110 qui, de façon usuelle, peut être fixé sur la paroi avant 108. Le groupe froid 110 permet de maintenir la température à l'intérieur de l'espace de chargement 112 à une valeur de consigne positive ou négative.

La carrosserie 101 est, par ailleurs, équipée d'une cloison 114 mobile longitudinalement qui permet de partitionner l'espace de chargement 112 en deux zones distinctes qui peuvent être maintenues à des températures différentes.

Dans l'exemple de réalisation représenté sur les figures, la cloison 114 comprend deux panneaux 115 réalisés dans un sandwich isotherme. Chaque panneau 115 est de plus doté d'un joint périphérique à lèvre 117. Il peut être envisagé que la cloison 114 comprenne un unique panneau 115.

Chacun des panneaux 115 est fixé au pavillon 106 par un mécanisme de liaison 10 qui, comme on va le voir, permet de maintenir les panneaux 115 dans une position fixe verticale ou horizontale en applique du pavillon 106 et permet de déplacer les panneaux 115 en fonction du chargement qui doit prendre place dans l'espace de chargement 112.

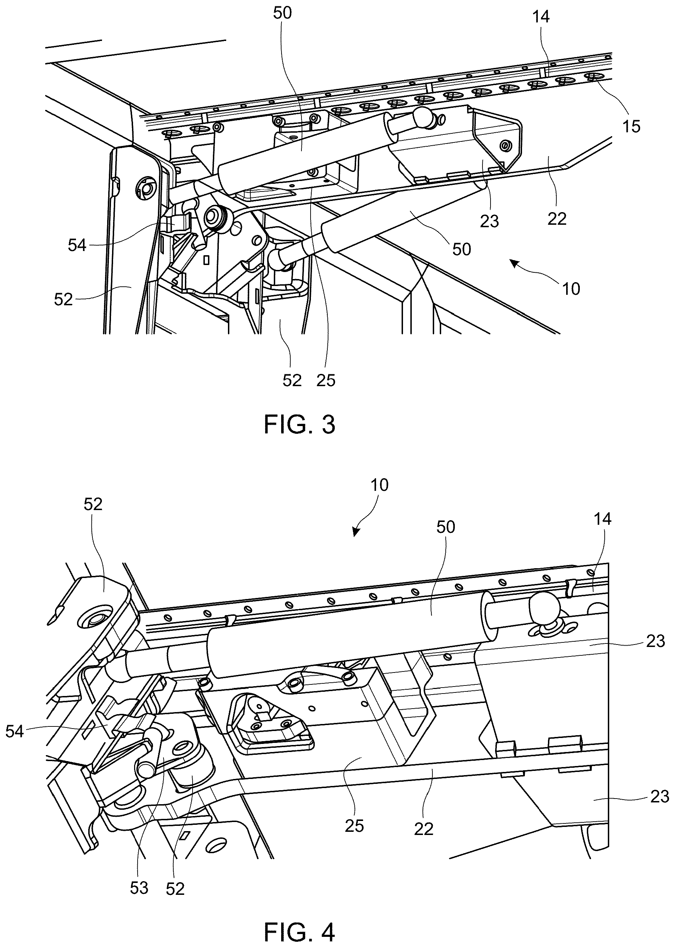

Le mécanisme de liaison 10 de la cloison 114 au pavillon 106 est représenté plus particulièrement aux Figures 3 et 4.

Le mécanisme de liaison 10 comprend deux rails 12 fixes qui sont placés sur le pavillon 106 et deux ensembles mobiles 17 qui coulissent sur les rails 12.

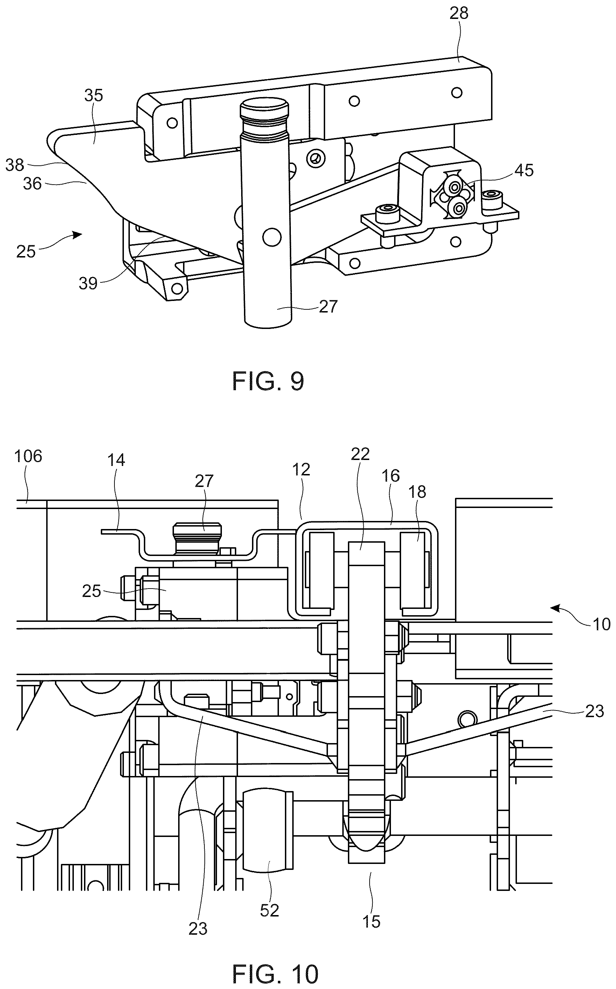

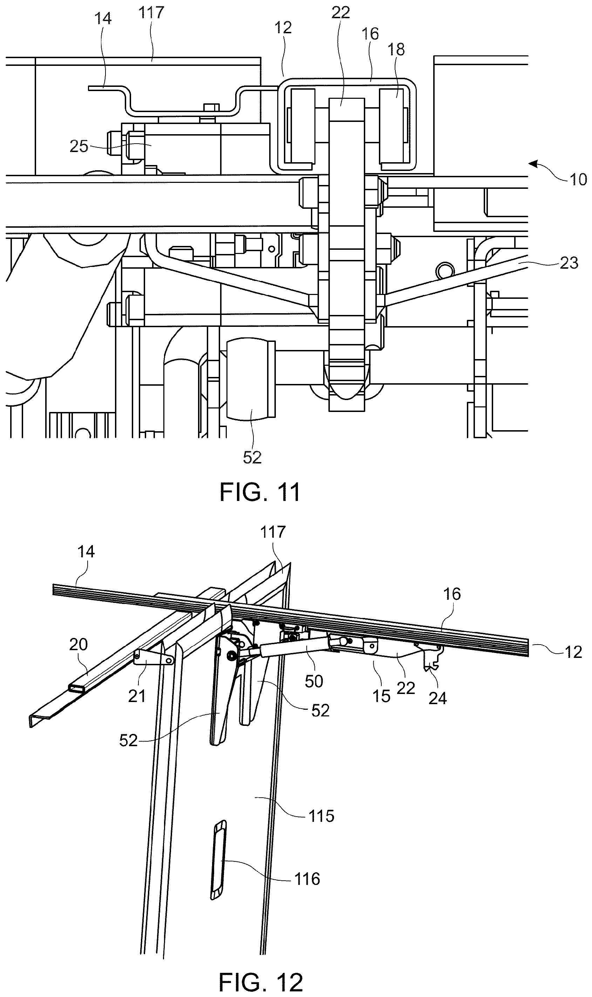

Le pavillon 106 est ainsi équipé de deux rails 12 qui sont comprennent, chacun, un profilé 14 pourvu de perçages 15 à un pas régulier et d'une glissière 16 en forme de C, comme on peut le voir sur les vues en coupe des figures 10 et 11. Les deux rails 12 sont parallèles et sont orientés dans le sens longitudinal.

Sur chacun de ces rails 12, coulisse un ensemble mobile 17 sur lequel est suspendu un panneau 115.

Chaque ensemble mobile 17 comprend un train de galets 18 qui est conçu et dimensionné pour coulisser dans la glissière 16 correspondante d'un rail 12. Dans l'exemple représenté sur les figures, les deux ensembles mobiles 17 sont reliés par une ou plusieurs traverses 19 ce qui fait que les deux ensembles mobiles 17 ne peuvent pas se déplacer de manière indépendante l'un de l'autre.

Les deux ensembles mobiles 17 sont également reliés par une traverse antérieure 20. La traverse antérieure 20 est équipée de pattes 21 qui servent à guider et à maintenir l'assiette du panneau 115 quand il est en position verticale.

L'ensemble mobile 17 comprend, de plus, une platine 22 qui s'étend verticalement à partir de l'ensemble mobile 17. La platine 22 peut être formée par exemple dans un plat métallique découpé puis soudé sur la glissière.

La platine 22 présente à son extrémité arrière une crosse de verrouillage 24. La platine 22 est équipée de deux entretoises 23 sur lesquelles viennent se fixer les extrémités de deux vérins comme on le verra plus loin.

La platine 22 reçoit, de plus, un boitier d'indexation 25. Le boitier d'indexation 25 permet de verrouiller dans une position longitudinale donnée la cloison 114 par rapport au rail 12.

Le boitier d'indexation 25 possède un doigt de verrouillage 27 conçu pour s'engager dans l'un des perçages 15 du rail 12 et bloquer le déplacement longitudinal de la glissière et donc du panneau 115 qui lui est attaché.

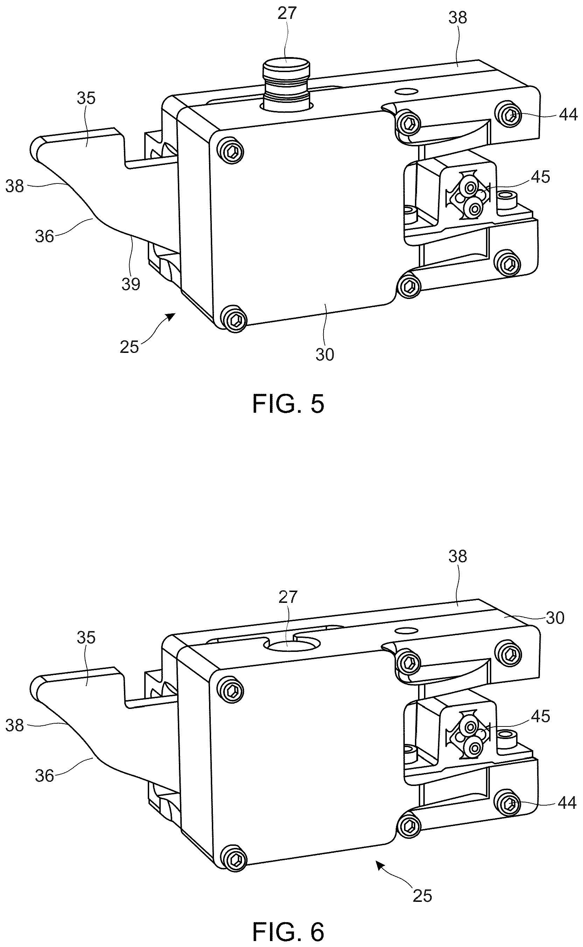

On peut se reporter aux figures 5 à 9 pour apprécier la structure du boitier d'indexation 25.

Le boitier d'indexation 25 comprend une base 28 dans laquelle est ménagée une glissière 29 dont la section transversale présente une forme générale de T et un couvercle 30 dans lequel est ménagé un cylindre 32 qui est débouchant par une fente 33 sur une de ses génératrices.

La glissière 29 est conçue et dimensionnée pour recevoir une came 35 coulissante. La came 35 coulissante présente une partie conçue pour coulisser sur la glissière 29 de la base 28. La came 35 coulissante présente à son extrémité libre une rampe 36 ; dans l'exemple représenté sur les figures, la rampe 36 possède deux segments inclinés 38 et 39, le segment d'extrémité 38 ayant une pente plus importante que celle du segment proximal 39. La came 35 possède, de plus, une lumière 34 oblique qui est orientée sensiblement à 45° par rapport à la direction de coulissement de la came 35.

Le doigt de verrouillage 27 présente une structure cylindrique avec une nervure 40 sur une de ses génératrices et est dimensionné pour coulisser dans le cylindre 32 du couvercle 30 ; la nervure 40 du doigt de verrouillage 27 étant engagée dans la fente 33 du couvercle 30. L'extrémité du doigt de verrouillage 27 est pourvue d'une gorge annulaire 41.

Une goupille 42 est, par ailleurs, fixée dans le doigt de verrouillée 27 perpendiculairement à celui-ci. La goupille 42 est conçue et dimensionnée pour s'engager dans la lumière 34 de la came 35.

On voit que la came 35 et le doigt de verrouillage 27 sont mécaniquement liés et un déplacement longitudinal de la came 35 produit un déplacement vertical du doigt de verrouillage 27.

Le couvercle 30 est fixé sur la platine 22 par une série de vis 44 et ainsi prend en sandwich la came 35.

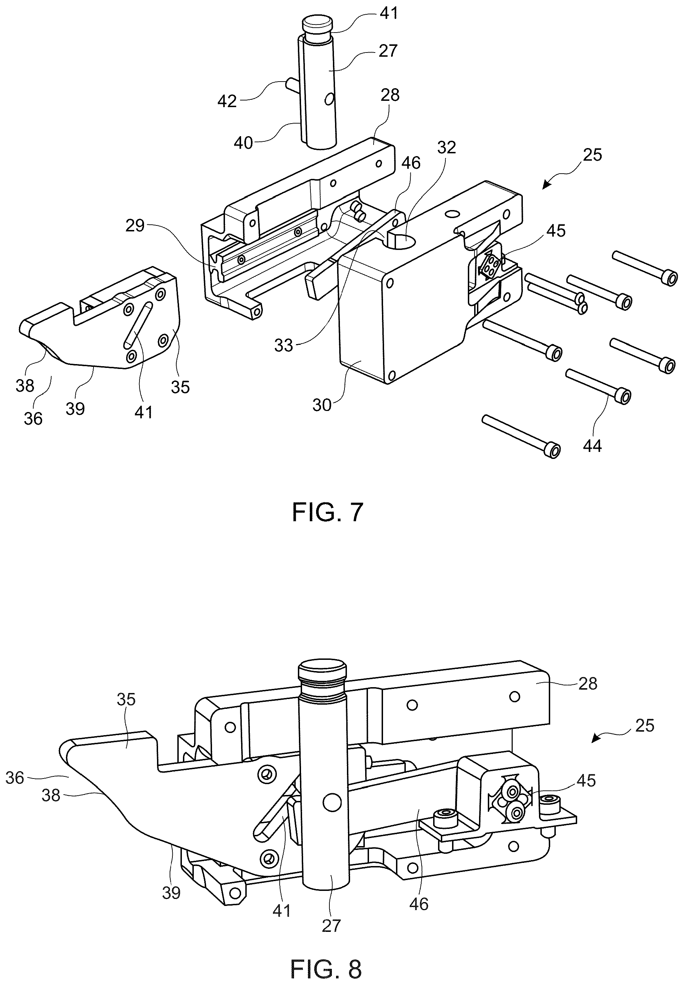

Le doigt de verrouillage 27 est sollicité en position déployée montrée, par exemple, aux figures 5 et 8 par un élément élastique. Dans l'exemple de réalisation représenté sur les dessins, l'élément élastique est un ressort carré 45 en caoutchouc qui est placé dans un logement ménagé dans le support 28. Le ressort carré 45 en caoutchouc est relié à une bielle 46 dont l'extrémité libre vient pousser la goupille 42 du doigt de verrouillage 27 dans sa position déployée et vient simultanément pousser la came 35 vers sa position déployée.

Dans sa configuration de repos, le boitier d'indexation 25 se présente donc dans une position dans laquelle le came 35 et le doigt de verrouillage 27 sont déployés.

Chaque panneau 115 est, pour sa part, fixé sur une chape 47 formée de profilés métalliques qui, dans l'exemple de réalisation montré sur les figures, présente une géométrie en H. La chape 47 est conçue et dimensionnée pour permettre une reprise des efforts qui s'appliquent au panneau 115 notamment lors de sa rotation.

La chape 47 est montée en pivot sur la platine 22 par l'intermédiaire de deux axes 48.

Le mécanisme de liaison 10 de la cloison 114 au pavillon 106 comprend également des moyens pour assister la rotation de la cloison 114 en direction du pavillon 106.

En pratique, il est prévu que deux vérins 50 à gaz soient disposés entre un ensemble mobile 17 et la chape 47 d'un panneau 115. Pour cela, la chape 47 comprend deux ailes 54 sur chacune desquelles vient se fixer un vérin 50 par un axe de liaison approprié ; chacun des vérins 50 est, par ailleurs, fixé sur une entretoise 23 ce qui assure la liaison du vérin 50 avec l'ensemble mobile 17.

En se reportant à la figure 4, on peut voir que la chape 47 supporte un galet 52. Le galet 52 est fixé sur une patte 53 qui dépasse perpendiculairement de la chape 47 et est positionné pour venir en appui contre la came 35 du boitier d'indexation 25 lors de la rotation du panneau 115.

Le fonctionnement de la cloison 114 de partitionnement est décrit à partir de sa position verticale telle qu'on peut la voir à la figure 11.

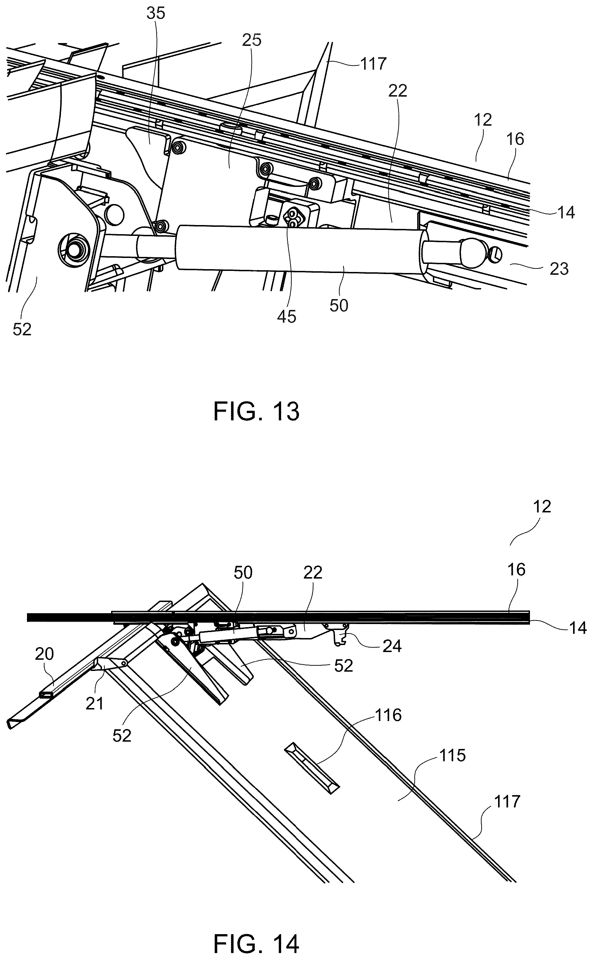

Dans cette configuration de la cloison 114, les deux panneaux 115 (un seul panneau 115 est représenté sur la figure 11 pour faciliter la compréhension du fonctionnement de l'invention) sont disposés verticalement et sont bloqués longitudinalement ; en effet, le doigt de chacun des boitiers d'indexation est engagé dans un perçage comme on peut le voir sur la figure 13.

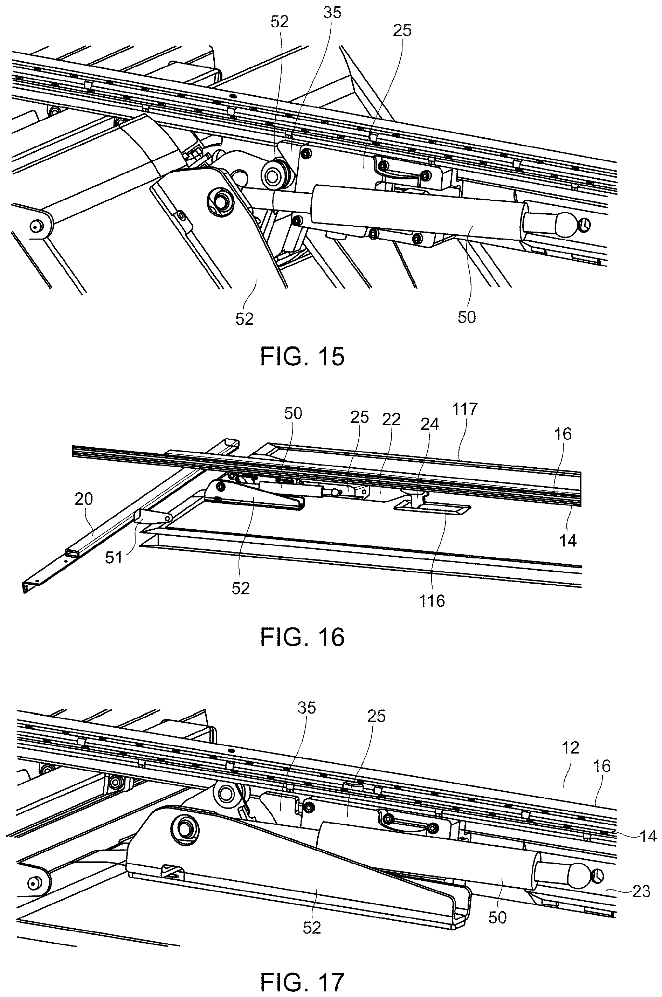

En cas de besoin de reconfiguration de l'espace de chargement 112, un utilisateur peut effectuer une traction sur un panneau 115 pour amener le panneau 115 à un angle compris entre 60° et 30° avec le pavillon 106 et, par exemple, de l'ordre de 45° (voir figures 14 et 15). En pratique, l'utilisateur agit sur un premier panneau 115 puis sur le second panneau 115. La dissociation de la cloison 114 en deux panneaux 115 permet une manipulation plus facile pour l'utilisateur.

Au cours de la rotation du panneau 115, la came 35 se trouve sur la trajectoire du galet 52 qui est lui-même embarqué par la rotation du panneau 115. De ce fait, le galet 52 vient rouler contre la came 35 ce qui a, pour effet, de pousser la came 35 dans le boitier d'indexation 25. Le déplacement de la came 35 entraine alors la rétraction du doigt de verrouillage 27 vers sa position escamotée ce qui le dégage du perçage 15 du rail 12 dans lequel le doigt de verrouillage 27 était préalablement engagé. Le fait que la came 35 présente un profil à deux segments permet une attaque du galet 52 plus douce sur le segment proximal 39 puis un effet plus franc sur le segment d'extrémité 38 qui présente la pente la plus accentuée. Le verrouillage longitudinal du panneau 115 par rapport au pavillon 106 est donc levé, pour autant que le panneau 115 reste dans avec l'orientation angulaire comprise entre 60° et 30° et d'environ 45° par rapport au pavillon 106.

L'utilisateur peut alors déplacer les panneaux 115 dans la direction longitudinale de la carrosserie puisque l'ensemble mobile 17 peut coulisser dans le rail 12 grâce à son train de galets 18 qui glisse dans la glissière 16.

Selon la configuration que l'utilisateur souhaite donner à l'espace de chargement, l'utilisateur peut soit replacer les panneaux 115 à la verticale en appliquant une poussée sur ceux-ci. Au cours de la rotation du panneau 115 vers sa position verticale, le galet 52 se dégage de la came 35 et le doigt de verrouillage 27 est rappelé dans sa position déployée par la bielle 46 qui est elle-même sollicitée par le ressort carré 45 en caoutchouc.

L'utilisateur peut également placer le panneau 115 en position escamotée dans laquelle le panneau 115 est en applique contre le pavillon 106. Pour cela, l'utilisateur accompagne la rotation du panneau 115 qui est entrainée dans sa course par les vérins 50.

Au cours de la rotation du panneau 115, le galet 52 échappe à la came 35. La came 35 est rappelée dans sa position de sortie par la bielle 46, elle-même sollicitée par le ressort carré 45 en caoutchouc ; le doigt de verrouillage 27 reprend sa position déployée et peut s'engager dans une ouverture 15 pratiquée dans le rail 12 bloquant ainsi le panneau 115 dans une position longitudinale.

Dans cette position escamotée, il est prévu un verrouillage du panneau 115 sur le pavillon 106. Comme cela est représenté sur les figures, le panneau 115 peut comprendre une gâche 116 escamotable qui vient s'engager sur la crosse de verrouillage 24. Un verrouillage du panneau 115 dans sa position escamotée par une ventouse magnétique peut aussi être envisagé.

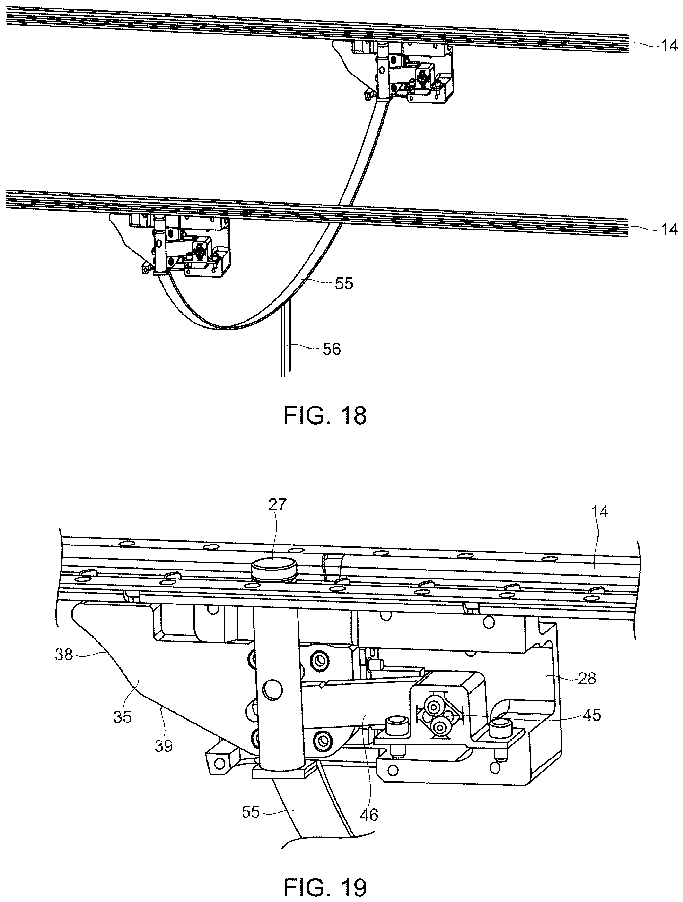

Dans une variante de l'invention, il peut être envisagé de relier les deux boitiers d'indexation. Comme le montre la figure 18, il peut être prévu de relier mécaniquement la partie inférieure des deux doigts de verrouillage 27 des ensembles mobiles 17. Pour cela, un cordon de liaison 55 relie les deux doigts de verrouillage 27 ; le cordon de liaison 55 est lui-même pourvu d'un cordon de préhension 56 qui vient se fixer sensiblement au centre du cordon de liaison.

En exerçant une traction sur le cordon de préhension, l'utilisateur peut simultanément déverrouiller les deux doigts de verrouillage. Cela permet à l'utilisateur de procéder à un ajustement de la position des panneaux 115 sans pour autant devoir faire pivoter les panneaux 115.

Il peut également être envisagé de doter chacun des doigts de verrouillage de leur propre cordon ce qui permet de piloter chaque panneau de manière indépendante.

## Revendications

1. Carrosserie de véhicule frigorifique pour le transport de marchandise comprenant :
- un plancher, un pavillon (106), deux parois latérales, une paroi avant, un ouvrant arrière qui délimitent un espace de chargement (112) ;
- un groupe frigorifique ;
- au moins un panneau (114) de partitionnement de l'espace de chargement (112) relié au pavillon (106) par un mécanisme de liaison (10) ; le mécanisme de liaison (10) comprenant :
- un rail (12) fixé sur le pavillon (106) comprenant des perçages (15)
- un ensemble mobile (17) configuré pour supporter par une liaison pivot le panneau (114) et pour coulisser sur le rail (12), l'ensemble mobile (17) comprenant un boitier d'indexation (25) ayant un doigt de verrouillage (27) mécaniquement lié à une came (35), le doigt de verrouillage (27) étant sollicité par des moyens élastiques dans une position déployée dans laquelle le doigt de verrouillage (27) s'engage dans un perçage (15) ;
- un galet (52) supporté par le panneau (114) configuré pour venir en appui contre la came (35) lorsque le panneau (114) pivote par rapport au pavillon (106) d'un angle compris entre 30° et 60° et rétracter le doigt de verrouillage (27) pour permettre le glissement de l'ensemble mobile (17) par rapport au rail (12) dans une direction longitudinale X,
**caractérisée en ce que** le boitier d'indexation (25) comprend des moyens de guidage de la came (35) dans la direction longitudinale X et des moyens de guidage du doigt de verrouillage (27) dans une direction verticale Z perpendiculaire à la direction longitudinale X, la came (35) présentant une lumière (34) orientée obliquement par rapport à la première direction longitudinale, dans laquelle est engagée une goupille (42) solidaire du doigt de verrouillage (27).

2. Carrosserie de véhicule frigorifique selon la revendication 1, **caractérisée en ce que** le boitier d'indexation (25) comprend un ressort carré (45) et une bielle (46) dont une extrémité est liée au ressort carré (45) et dont la seconde extrémité pousse la goupille (42) dans la position déployée du doigt de verrouillage (27).

3. Carrosserie de véhicule frigorifique selon l'une des revendications 1 à 2, **caractérisée en ce que** la lumière (34) est orientée dans une plage angulaire de 30° à 60° par rapport à la direction longitudinale X.

4. Carrosserie de véhicule frigorifique selon l'une des revendications 1 à 3, **caractérisée en ce que** la came (35) présente une rampe (36) comprenant deux segments inclinés (38,39), le segment d'extrémité (38) ayant une pente plus importante que celle du segment proximal (39) par rapport à la direction longitudinale X.

5. Carrosserie de véhicule frigorifique selon l'une des revendications 1 à 4, **caractérisée en ce que** le mécanisme de liaison (10) comprend une chape (47) sur laquelle est fixée le panneau (115), la chape (47) supportant le galet (52).

6. Carrosserie de véhicule frigorifique selon l'une des revendications 1 à 5, **caractérisée en ce que** le mécanisme de liaison (10) comprend au moins un vérin (50) à gaz qui relie l'ensemble mobile (17) au panneau (114).

7. Carrosserie de véhicule frigorifique selon l'une des revendications 1 à 6, **caractérisée en ce que** le panneau (115) est pourvu d'un joint périphérique (117).

8. Carrosserie de véhicule frigorifique selon l'une des revendications 5 ou la revendication 7 lorsqu'elle dépend de la revendication 5, **caractérisée en ce que** l'ensemble mobile (17) comprend au moins un axe (48) sur lequel est montée la chape (47).

9. Carrosserie de véhicule frigorifique selon l'une des revendications 1 à 7, caractérisée en que le mécanisme de liaison (10) comprend des moyens de blocage de panneau (114) lorsque le panneau est en applique contre le pavillon.

10. Carrosserie de véhicule frigorifique selon l'une des revendications 1 à 9, **caractérisée en ce que** la carrosserie comprend deux rails (12) sur lesquels sont disposés deux ensembles mobiles (17) qui supportent chacun un panneau (115).

11. Carrosserie de véhicule frigorifique selon la revendication 10, **caractérisée en ce que** les deux ensembles mobiles (10) sont reliée par au moins une traverse (18).

12. Carrosserie de véhicule frigorifique selon l'une des revendications 8 à 9, **caractérisée en ce qu'**un cordon de liaison (55) relie chaque doigt de verrouillage (27) de chacun des ensemble mobile (17).

## Patentansprüche

1. Kühlfahrzeugaufbau für den Gütertransport, umfassend:
- einen Boden, ein Dach (106), zwei Seitenwände, eine Vorderwand, eine Hecköffnung, die einen Laderaum (112) begrenzen;
- ein Kühlaggregat;
- mindestens eine durch einen Verbindungsmechanismus (10) mit dem Dach (106) verbundene Trennwand-Paneele (114) des Laderaums (112);
wobei der Verbindungsmechanismus (10), umfasst:
- eine am Dach (106) fixierte Schiene (12), die Bohrungen (15) umfasst
- eine bewegliche Einheit (17), die konfiguriert ist, um über eine Schwenkverbindung die Paneele (114) zu tragen, und um auf der Schiene (12) zu gleiten, wobei die bewegliche Einheit (17) ein Indexiergehäuse (25) umfasst, das einen Verriegelungsfinger (27) aufweist, der mechanisch mit einem Nocken (35) verbunden ist, wobei der Verriegelungsfinger (27) durch elastische Mittel in einer ausgeklappten Position belastet wird, in welcher der Verriegelungsfinger (27) in eine Bohrung (15) eingreift;
- eine Rolle (52), die von der Paneele (114) getragen wird und konfiguriert ist, um am Nocken (35) anzuliegen, wenn die Paneele (114) in Bezug auf das Dach (106) um einen Winkel schwenkt, der zwischen 30° und 60° liegt, und den Verriegelungsfinger (27) zurückzieht, um das Gleiten der beweglichen Einheit (17) in Bezug auf die Schiene (12) in Längsrichtung X zu ermöglichen,
**dadurch gekennzeichnet, dass** das Indexiergehäuse (25) Mittel zum Führen des Nocken (35) in Längsrichtung X und Mittel zum Führen des Verriegelungsfingers (27) in einer vertikalen Richtung Z senkrecht zur Längsrichtung X umfasst, wobei der Nocken (35) ein in Bezug zur ersten Längsrichtung schräg ausgerichtetes Langloch (34) aufweist, in das ein mit dem Verriegelungsfinger (27) fest verbundener Stift (42) eingeführt ist.

2. Kühlfahrzeugaufbau nach Anspruch 1, **dadurch gekennzeichnet, dass** das Indexiergehäuse (25) eine Vierkantfeder (45) und eine Triebstange (46) umfasst, von der ein Ende mit der Vierkantfeder (45) verbunden ist und deren zweites Ende den Stift (42) in die ausgeklappte Position des Verriegelungsfingers (27) drückt.

3. Kühlfahrzeugaufbau nach einem der Ansprüche 1 bis 2, **dadurch gekennzeichnet, dass** das Langloch (34) in einem Winkelbereich von 30° bis 60° in Bezug zur Längsrichtung X ausgerichtet ist.

4. Kühlfahrzeugaufbau nach einem der Ansprüche 1 bis 3, **dadurch gekennzeichnet, dass** der Nocken (35) eine Rampe (36) aufweist, die zwei geneigte Segmente (38, 39) umfasst, wobei das Endsegment (38) eine größere Neigung als jene des proximalen Segments (39) in Bezug auf die Längsrichtung X aufweist.

5. Kühlfahrzeugaufbau nach einem der Ansprüche 1 bis 4, **dadurch gekennzeichnet, dass** der Verbindungsmechanismus (10) einen Gabelkopf (47) umfasst, an dem die Paneele (115) fixiert ist, wobei der Gabelkopf (47) die Rolle (52) trägt.

6. Kühlfahrzeugaufbau nach einem der Ansprüche 1 bis 5, **dadurch gekennzeichnet, dass** der Verbindungsmechanismus (10) mindestens eine Gasfeder (50) umfasst, welche die bewegliche Einheit (17) mit der Paneele (114) verbindet.

7. Kühlfahrzeugaufbau nach einem der Ansprüche 1 bis 6, **dadurch gekennzeichnet, dass** die Paneele (115) mit einer umlaufenden Dichtung (117) versehen ist.

8. Kühlfahrzeugaufbau nach einem der Ansprüche 5 oder Anspruch 7, wenn von Anspruch 5 abhängig, **dadurch gekennzeichnet, dass** die bewegliche Einheit (17) mindestens eine Spindel (48) umfasst, an welcher der Gabelkopf (47) montiert ist.

9. Kühlfahrzeugaufbau nach einem der Ansprüche 1 bis 7, **dadurch gekennzeichnet, dass** der Verbindungsmechanismus (10) Paneelensperrmittel (114) umfasst, wenn die Paneele am Dach anliegt.

10. Kühlfahrzeugaufbau nach einem der Ansprüche 1 bis 9, **dadurch gekennzeichnet, dass** der Aufbau zwei Schienen (12) umfasst, an denen zwei bewegliche Einheiten (17) angeordnet sind, die jeweils eine Paneele (115) tragen.

11. Kühlfahrzeugaufbau nach Anspruch 10, **dadurch gekennzeichnet, dass** die beiden beweglichen Einheiten (10) durch mindestens einen Querträger (18) verbunden sind.

12. Kühlfahrzeugaufbau nach einem der Ansprüche 8 bis 9, **dadurch gekennzeichnet, dass** eine Verbindungsschnur (55) jeden Verriegelungsfinger (27) einer jeden der beweglichen Einheiten (17) verbindet.

## Claims

1. A body of a refrigerated vehicle for the transport of goods, comprising:
- a floor, a roof (106), two lateral walls, a front wall, and a rear opening leaf which delimit a loading space (112);
- a refrigeration unit;
- at least one panel (114) for partitioning the loading space (112), connected to the roof (106) by a connecting mechanism (10);
the connecting mechanism (10) comprising:
- a rail (12) fastened to the roof (106), comprising holes (15);
- a movable assembly (17) configured to support the panel (114) by a pivot connection and to slide on the rail (12), the movable assembly (17) comprising an indexing housing (25) having a locking finger (27) mechanically linked to a cam (35), the locking finger (27) being biased by resilient means into a deployed position in which the locking finger (27) engages in a hole (15);
- a roller (52) supported by the panel (114), configured to bear against the cam (35) when the panel (114) pivots relative to the roof (106) by an angle comprised between 30° and 60°, and to retract the locking finger (27) so as to allow the movable assembly (17) to slide relative to the rail (12) in a longitudinal direction X,
**characterized in that** the indexing housing (25) comprises
means for guiding the cam (35) in the longitudinal direction X and means for guiding the locking finger (27) in a vertical direction Z perpendicular to the longitudinal direction X, the cam (35) having a slot (34) oriented obliquely relative to the first longitudinal direction, in which a pin (42) secured to the locking finger (27) is engaged.

2. The body of a refrigerated vehicle according to claim 1, **characterized in that** the indexing housing (25) comprises a square spring (45) and a connecting rod (46), one end of which is linked to the square spring (45) and the other end of which urges the pin (42) into the deployed position of the locking finger (27).

3. The body of a refrigerated vehicle according to any of claims 1 and 2, **characterized in that** the slot (34) is oriented within an angular range of 30° to 60° relative to the longitudinal direction X.

4. The body of a refrigerated vehicle according to any of claims 1 to 3, **characterized in that** the cam (35) has a ramp (36) comprising two inclined segments (38, 39), the end segment (38) having a steeper slope than that of the proximal segment (39) relative to the longitudinal direction X.

5. The body of a refrigerated vehicle according to any of claims 1 to 4, **characterized in that** the connecting mechanism (10) comprises a clevis (47) to which the panel (114) is fastened, the clevis (47) supporting the roller (52).

6. The body of a refrigerated vehicle according to any of claims 1 to 5, **characterized in that** the connecting mechanism (10) comprises at least one gas strut (50) which connects the movable assembly (17) to the panel (114).

7. The body of a refrigerated vehicle according to any of claims 1 to 6, **characterized in that** the panel (115) is provided with a peripheral seal (117).

8. The body of a refrigerated vehicle according to claim 5 or to claim 7 when dependent on claim 5, **characterized in that** the movable assembly (17) comprises at least one shaft (48) on which the clevis (47) is mounted.

9. The body of a refrigerated vehicle according to any of claims 1 to 7, **characterized in that** the connecting mechanism (10) comprises means for blocking the panel (114) when the panel is in abutment against the roof.

10. The body of a refrigerated vehicle according to any of claims 1 to 9, **characterized in that** the body comprises two rails (12) on which two movable assemblies (17) are disposed, each supporting a panel (115).

11. The body of a refrigerated vehicle according to claim 10, **characterized in that** the two movable assemblies (17) are connected by at least one cross-member (18).

12. The body of a refrigerated vehicle according to any of claims 8 and 9, **characterized in that** a connecting cord (55) connects each locking finger (27) of each of the movable assemblies (17).
